# EUROPEAN PATENT APPLICATION

(11) **EP 1 758 331 A1**
(43) Date of publication of application: **28.02.2007**
(21) Application number: 05018215.3
(22) Date of filing: 22.08.2005
(51) Int. Cl.: H04L 29/06

(54) **Method and device for streaming wireless digital content**

(71) Applicant: Lin, Jeng-Tay, Shilin Taipei City (TW)
(72) Inventor: Lin, Jeng-Tay, Shilin Taipei City (TW)
(74) Representative: Viering, Jentschura & Partner

(57) **Abstract**

A device (100,100') for streaming wireless digital content uses a processor (30), an output unit (31) and a wireless communication module (32). The processor has an arbitration circuit module used to manage streaming, storage and output of digital content packets. The wireless communication module is electrically connected to the processor to connect to a wireless local area network (WLAN) to stream multimedia content packets. The digital content is downloaded from the servers (12a,12b,12c) connected with the Internet (10) and played back in real time. Whether the wireless communication module is activated or not is determined (S521) so that the device of the present invention consumes less electric power and less memory space.

## Description

### BACKGROUND OF THE INVENTION

### 1. Field of the Invention

The present invention relates to a method and a device for streaming wireless digital content, and in particular to a method and a device for streaming digital content through wireless local area network (WLAN).

### 2. Description of Related Art

Conventional portable multimedia devices such as portable MP3 players utilize the integrated flash memory or hard disks thereof to store multimedia files so that users can access the multimedia files anytime.

US Patent No. 6,085,252 entitled, "Device, System and Method for Real-Time Multimedia Streaming", discloses a real-time method and device for downloading multimedia files. After the mutlimedia files in packets are received by the device, the mulitmedia files are processed by a packet processor to estimate the packet loss and packet error. Then, the device utilizes a QoS (Quality of Service) manager to retransmit the multimedia files to a multimedia player for real-time playback.

US Patent No. 6,665,772 discloses a method for storing streaming and non-streaming data. The method of the '772 patent organizes addressable locations of a data storage in a logical sequence to store non-streaming data by accessing the logical sequence of addressable locations.

US Patent No. 6,263,371, entitled "Method and Apparatus for Seaming of Streaming Content", uses packet sequence numbers or time stamps to identify characteristics of packet received from different content sources. Besides, a proxy is disposed in the streaming download device to detect data loss for merging together information from other content sources so that information "gaps" are as few as possible.

With an understanding of processing of network packets, streaming download technology and wireless telecommunication systems, the conventional portable multimedia device has everything to do with storage space requirements and multimedia file contents. Electric power supplied to the conventional portable multimedia device is crucial. For example, a wireless communication module consumes most electric power supplied to the conventional portable multimedia device when the multimedia file is downloaded via the wireless telecommunication. In addition, driving hard disks also consume a great deal of electric power.

### SUMMARY OF THE INVENTION

It is an object of the present invention to provide a method and a device for streaming wireless digital content. The present invention utilizes a small amount of a storage memory to download digital content by streaming through the Internet so that a real-time playback of multimedia data is produced. According to the present invention, the downloaded digital content may be stored in an external storage device, or the downloaded digital content may be discarded without saving after the downloaded digital content is played back. The real-time playback of multimedia content remains unchanged. The present invention detects a memory space of storage device and determines whether to turn on a wireless communication module so that the electric power and the cost of the storage device are conserved.

According to the present invention, a device for streaming wireless digital content includes a processor, an output unit, a wireless communication module, a storage unit and an input unit. The processor includes an arbitration circuit module used to manage streaming, storage and output of digital content packets. An output unit is electrically connected to the processor and includes a video signal output and an audio signal output. The wireless communication module is electrically connected to the processor and connects to a wireless local area network (WLAN) to stream digital content packets. The storage unit is electrically connected to the processor and includes a register to save the downloaded digital content packets. Further, the input unit is electrically connected to the processor and inputs operation instruction.

In addition, the storage unit includes a register with a small capacity. The downloaded digital content packets are stored in the register and consumed by real-time playback. The present invention utilizes the processor to detect how much digital content is stored in the storage unit, and thereby determine whether the wireless communication module is activated or deactivated. Thus, the device of the present invention consumes much less electric power.

According to the present invention, a method for streaming wireless digital content utilizes a device for streaming wireless digital content to download digital contents from one or more servers of multimedia content providers. After the device is turned on, the device detects the status of a connection network and quantity of digital content. Then, the wireless network connection is activated to stream wireless data and store the downloaded data in a register. The downloaded data is retrieved by a FIFO (First-In, First-Out) method and decoded to output the decoded data to the output unit in real time. It is determined whether to continue to stream wireless data during the streaming period. That is, whether the network connection is activated or deactivated depends on how much digital content is stored in the register. When the digital content stored in the register is equal to or larger than a preset threshold value, the network connection is deactivated and the downloading process stops. When the digital content is lower than the preset threshold value, the network connection is activated and the downloading process begins. Thus, the device for streaming digital content consumes less electrical power.

### BRIEF DESCRIPTION OF THE DRAWINGS

The present invention can be fully understood from the following detailed description and preferred embodiment with reference to the accompanying drawings, in which:
FIG. 1 schematically illustrates streaming wireless digital content of the present invention;
FIG. 2 schematically illustrates a device for streaming wireless digital content of the present invention;
FIG. 3 is a block diagram illustrating a device for streaming wireless digital content of the present invention;
FIG. 4 is a block diagram illustrating a device for streaming wireless digital content and a cradle of the present invention; and
FIG. 5 is a flow chart showing a method for streaming wireless digital content and a cradle of the present invention.

### DETAILED DESCRIPTION OF THE PREFERRED EMBODIMENTS

The following detailed description is of the best presently contemplated modes of carrying out the invention. This description is not to be taken in a limiting sense, and is made merely for the purpose of illustrating general principles of embodiments of the invention. The scope of the invention is best defined by the appended claims.

The present invention provides a method and a device for streaming wireless digital content. The present invention can save memory space and playback real-time streaming multimedia files. Even, the present invention can protect copyrights of the multimedia files. Features and advantages of the present invention are in the following.
1. A small memory space of the register is utilized.
2. Digital content is downloaded from a server by wireless (or cable) streaming, and the server is connected to the Internet. The wireless connection technology includes wireless communication protocols such as WiFi (EEE802.11x), WiMAX (IEEE802.16x) or GPRS (General Packet Radio Service). The physical connection technology includes ADSL (Asymmetric Digital Subscriber Line) or Cable Modem. The connection technology is not limited.
3. Real-time multimedia playback is provided.
4. The device of the present invention can store the downloaded digital content in an external storage device. Besides, the downloaded digital content is discarded after the downloaded digital content is played back. Consumers can download multimedia content in a legal and safe way through a suitable authentication mechanism. Besides, the present invention can protect the copyright of the multimedia content.
5. Whether the network connection is activated or deactivated depends on how much digital content is stored in the register. Thus, the device of the present invention consumes much less electrical power. When the network connection is deactivated, status of the wireless communication module is in power saving mode or in sleeping mode so that streaming of multimedia content stops. Besides, when the network connection is activated, status of wireless communication module returns to working condition so that streaming of multimedia content begins. Power consumption is increased to normal value.

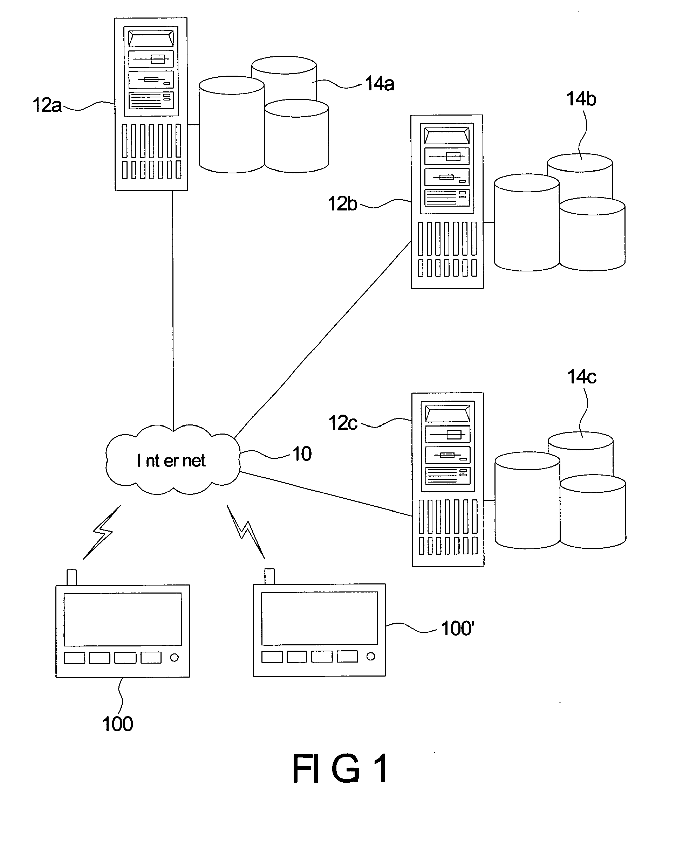

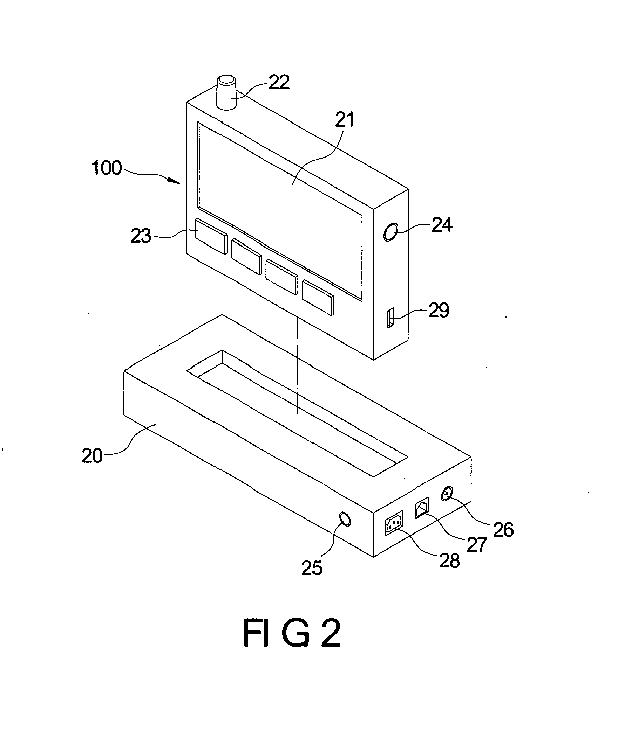

Reference is made to FIG. 1. FIG. 1 schematically illustrates the relationship between a device for downloading wireless multimedia content of the present invention and the Internet. According to FIG. 1, servers 12a, 12b and 12c are connected to the Internet 10 and are not limited to these servers to provide digital content. According to the transfer speed, data throughput or service redundancy, a plurality of servers 12a, 12b and 12c connected to the Internet 10. Consumers can download digital content by their portable multimedia devices 100 and 100'. Digital content such as music files in MP3 format is stored in databases 14a, 14b and 14c of the corresponding servers. Music files can be compressed by another compressed format such as OGG, WMA, WAV or AAC. Besides, digital content also includes MPEG video files, e-book, photograph, e-news and video games. The portable multimedia device 100 and 100' can access the Internet 10 via wireless or physical connection technology, as shown in FIG. 2.

FIG. 2 illustrates the portable multimedia device 100 and a cradle 20 of the present invention. Functionality of the cradle 20 can be extended and the cradle 20 is connected to the electrical power. The portable multimedia device 100 includes a display 21, an antenna 22, an input interface 23, an output interface 24 and a communication port 29. The display 21 is used to playback video, view photos or show an interactive menu. The antenna 22 is used to access wireless LAN, and for the sake of aesthetics, the antenna 22 can be an embedded-type component. The input interface 23 consists of, for example, a plurality of buttons, touch buttons or voice recognition module. The communication port 29 is positioned in the portable multimedia device 100, and the communication port 29 can be an USB port for connecting computers to update data. Besides, the portable multimedia device 100 is charged through the USB port. When the portable multimedia device 100 cannot access the Internet through wireless LAN, the communication port 29 with a suitable adapter can access the Internet via a physical network. The first output interface 24 is used to connect earphones or external stereo speakers.

Further reference is made to FIG. 2. The portable multimedia device 100 is connected to the cradle 20 by a connection adapter, and the cradle 20 includes a second audio output interface 26 to playback audio files by earphones or external stereo speakers. The cradle 20 also includes an Ethernet jack 27 such as a RJ45 jack. The cradle 20 can connect to the Internet through the Ethernet jack 27 even if there is no wireless access point. A power connector port 28 is used to provide AC or DC electric power with the portable multimedia device 100. The cradle 20 also includes a control interface 25 to provide a function of remote control through a remote controller (not shown) by communication protocols such as radio wave, Infrared Data (IrDA) or Bluetooth standards.

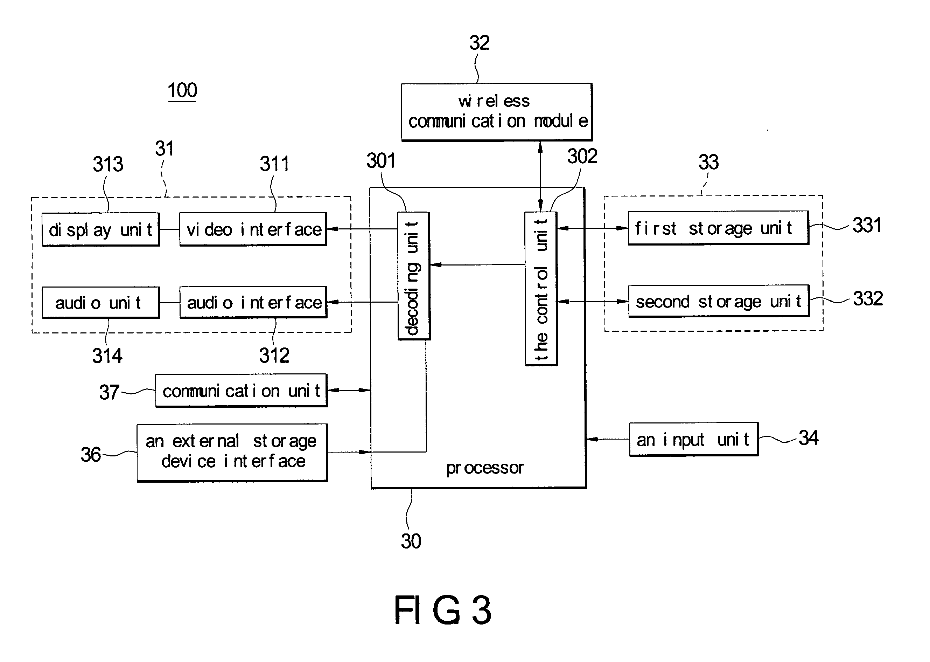

Reference is made to FIG. 3. FIG. 3 is a block diagram illustrating every component of the portable multimedia device 100 of the present invention. According to the present invention, the portable multimedia device 100 includes a processor 30, an output unit 31, a wireless communication module 32, a storage unit 33, an input unit 34 and an external storage device interface 36. The processor 30 is used to receive and output signals, and manage streaming and the address memory. The output unit 31 is electrically connected to the processor 30. The wireless communication module 32 and the storage unit 33 are electrically connected to the processor 30. The input unit 34 is electrically connected to the processor 30 to input operation instructions. Besides, the external storage device interface 36 is electrically connected to the processor 30, and the external storage device interface 36 can be an external storage medium (e.g. portable disks, external disks, external optical disc drive and memory cards) having digital content. The portable multimedia device 100 can play back the digital content. According to another embodiment of the present invention, consumers can store the downloaded digital content to the external storage medium through the external storage device interface. According to the download policy of digital content providers, consumers may be authorized to store the downloaded digital content to the external storage medium through the external storage device interface. Besides, the portable multimedia device 100 also includes a communication unit 37 such as USB or IEEE 1394 communication interfaces to connect to other computers (not shown). The portable multimedia device 100 can transfer digital content with other computers and be recharged by the communication unit 37. Even if there are no wireless access points and suitable interface adapters, the portable multimedia device 100 has no difficulty in accessing the Internet.

The processor 30 includes an arbitration circuit module (not shown) to manage streaming, storage, and output of digital content packets. Thus, it ensures seamless data content playback. The processor 30 also includes a control unit 302 and a decoding unit 301, and the control unit 302 and the decoding unit 301 are electrically connected to the storage unit 33 and the output unit 31, respectively. When the portable multimedia device 100 is turned on, the wireless communication module 32 is activated. The digital content is downloaded through the digital content servers connected to the Internet. The digital content is temporarily stored in a register of the storage unit 33 and decoded by the decoding unit 301. Then, the decoded digital content is output to the output unit 31.

The storage unit 33 includes a first storage unit 331 to provide a small space of memory. The storage unit 331 can be a flash memory or a dynamic random access memory (DRAM). The downloaded digital content files are temporarily stored in the first storage unit 331 and consumed because of real-time playback. It is possible to stream wireless data and do seamless playback with minimum space of memory. The processor 30 also has a capability of addressing memory of the storage unit 33 and is used to divide the memory into different segments and provide them with different indices. The processor 30 also defines an upper limit and a lower limit of the data content and their corresponding addresses.

The control unit 302 includes a memory data content detection mechanism (not shown) to detect the quantity of digital content by firmware or hardware. The control unit 302 can detect how much digital content is stored in the first storage unit 301. When the quantity of digital content is equal to or more than the preset upper limit value, the control unit 302 deactivates the wireless communication module 32. The wireless communication module 32 is in power saving mode or sleeping mode so that streaming digital content stops When the quantity of digital content is less than the preset lower limit value, the control unit 302 activates the wireless communication module 32. Then, the wireless communication module returns to normal condition so that streaming of digital content begins and power consumption is increased to normal value. The present invention utilizes the processor to detect how much digital content is stored in the register, and determine whether the wireless communication module is to be activated or deactivated. Thus, the wireless communication module 32, using the method according to the present invention, consumes much less electric power than when using conventional methods. A second storage unit 332 of the storage unit 33 can be a Read-Only Memory (ROM) or a static random access memory (SDRAM) to install an embedded operating system and peripheral drivers of the present invention.

When the digital content is retrieved from the storage unit 33, the compressed multimedia files are decoded by the decoding unit 301 of the processor 30. The video portion of the multimedia files is output to a display unit 313 by a video interface 311 of the output unit 31, e.g. a liquid crystal display of the portable multimedia device 100. The audio portion of the multimedia files is output to an audio unit 314 for connecting earphones.

Besides, according to the present invention, the external storage device interface 36 is used to connect the external storage medium with the portable multimedia device 100 so that digital content stored in the external storage medium is played back. The digital content stored in the external storage medium is decoded by the decoding unit 301 of the processor 30 and output to the output unit 31.

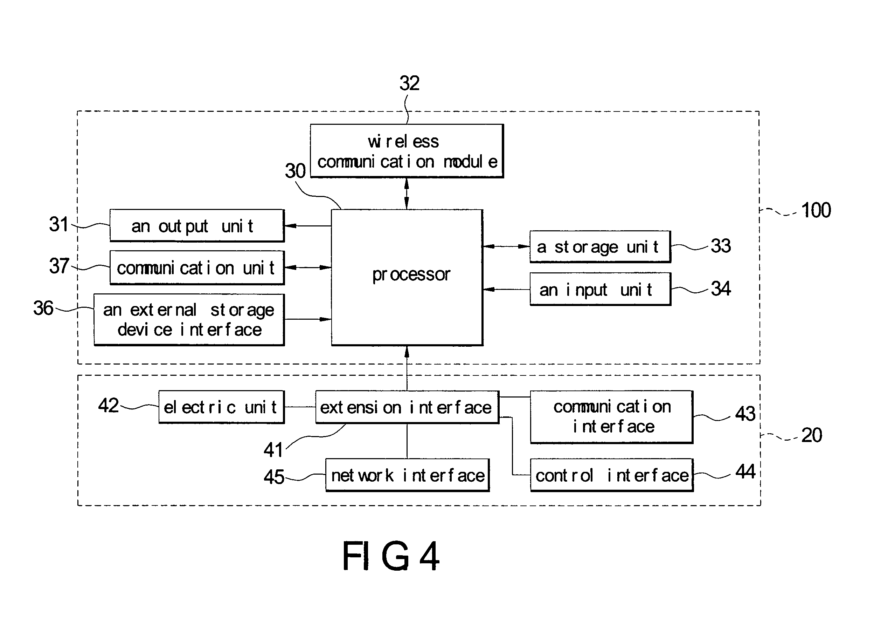

FIG. 4 is a block diagram illustrating the portable multimedia device 100 and the cradle 20 of the present invention. The portable multimedia device 100 is connected to the cradle 20 by an extension interface 41. The extension interface 41 is positioned at the cradle 20. An electric unit 42 is used to charge the portable multimedia device 100 and can be a rechargeable battery or an external (AC/DC) electric power. The cradle 20 includes a control interface 44 with a remote control function, and the control interface 44 can be an infrared remote control interface, a Bluetooth communication remote control interface or a radio wave remote control interface. When there are no wireless access points, a network interface 45 for connecting physical network is provided. Besides, a communication interface 43 (e.g. USB or IEEE1394) is also provided.

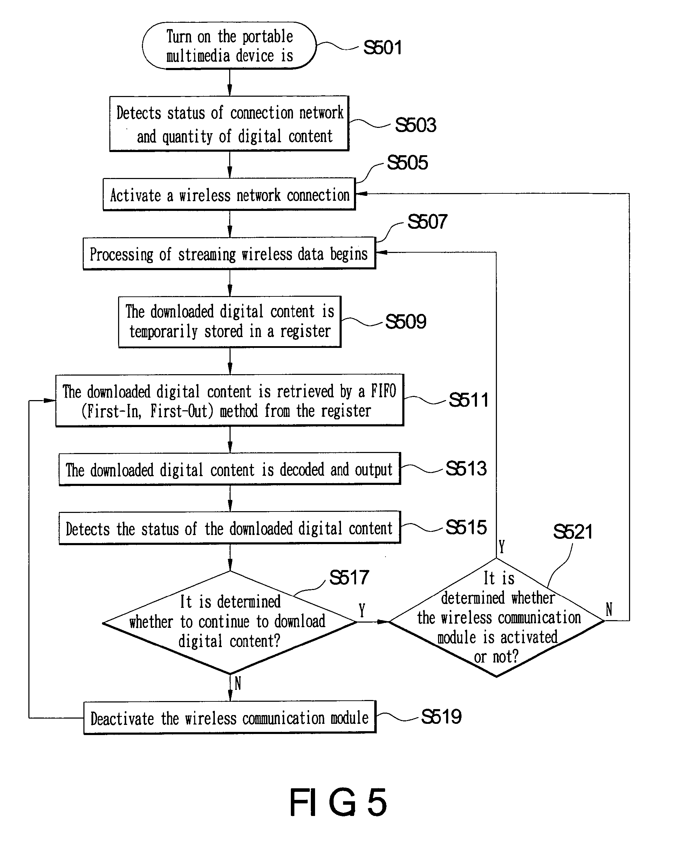

FIG. 5 is a flowchart illustrating a method for downloading wireless streaming digital content of the present invention. The digital content is downloaded from one or more servers of digital content providers. The processing of the flowchart is described in detail below.

Step S501: In step S501, the portable multimedia device 100 is turned on. Then, the process continues to step S503.

Step S503: In step S503, the device detects status of connection network and quantity of digital content. Then, the process continues to step S505.

Step S505: In step S505, a wireless network connection is activated. Then, the process continues to step S507.

Step S507: In step S507, processing of streaming wireless data begins. Then, the process continues to step S509.

Step S509: In step S509, the downloaded digital content is stored in a register such as a flash memory or a Random Access Memory (RAM). Then, the process continues to step S511.

Step S511: In step S511, the downloaded digital content is retrieved by a FIFO (First-In, First-Out) method from the register. Then, the process continues to step S513.

Step S513: In step S513, the downloaded digital content is decoded and output to the output unit 31 in real-time. Then, the process continues to step S515.

Step S515: In step S515, the processor detects the status of the downloaded digital content. Then, the process continues to step S517.

Step S517: In step S517, whether digital content downloading is to continue is determined. That is, whether the network connection is activated or deactivated depends on how much data content is stored in the register. If the data content saved in the register is equal to or larger than a preset threshold value, the network connection is deactivated and downloading stops. Then, the process continues to step S519. Otherwise, if the data is lower than the preset threshold value, the process continues to step S521.

Step S519: In step S519, the wireless communication module is deactivated.

Step S521: In step S521, whether or not the wireless communication module is activated is determined. If the wireless communication module is activated, the process returns to step S507. Otherwise, if the wireless communication module is deactivated, the process returns to step S505.

While the invention has been described with reference to the preferred embodiments, the description is not intended to be construed in a limiting sense. It is therefore contemplated that the appended claims will cover any such modifications or embodiments as may fall within the scope of the invention defined by the following claims and their equivalents.

## Claims

1. A device for streaming wireless digital content, comprising:
a processor, having an arbitration circuit module used to manage streaming, storage and output of digital content packets;
an output unit, electrically connected to the processor and having a video signal output and an audio signal output;
a wireless communication module, electrically connected to the processor to connect to a wireless local area network (WLAN) to stream digital content packets;
a storage unit, electrically connected to the processor and having a register to store the downloaded digital content packets;
an input unit, electrically connected to the processor to input operation instructions; and
a communication unit, electrically connected to the processor and used to exchange information with other computers via the Internet;
wherein the storage unit includes a register with a small capacity and the downloaded digital content is stored in the register and is consumed by a FIFO (First-In, First-Out) method to play back in real-time.

2. The device for streaming wireless digital content as claimed in claim 1, further comprising an external storage device interface for connecting an external storage medium.

3. The device for streaming wireless digital content as claimed in claim 2, wherein the downloaded digital content is stored in the external storage medium through the external memory device interface.

4. The device for streaming wireless digital content as claimed in claim 1, wherein the processor includes a control unit electrically connected with the storage unit and the wireless communication module.

5. The device for streaming wireless digital content as claimed in claim 4, wherein the control unit includes a memory data detection mechanism to detect a quantity of digital content, wherein when the quantity of digital content is equal to or greater than a preset upper limit value, the control unit deactivates the wireless communication module and downloading stops, and when the quantity of digital content is less than a preset lower limit value, the control unit activates the wireless communication module and downloading continues.

6. The device for streaming wireless digital content as claimed in claim 1, wherein the processor includes a decoding unit electrically connected with the output unit.

7. The device for streaming wireless digital content as claimed in claim 1, wherein the storage unit includes a Read-Only Memory (ROM).

8. The device for streaming wireless digital content as claimed in claim 1, wherein the storage unit includes a flash memory used to store temporarily the digital content.

9. The device for streaming wireless digital content as claimed in claim 1, wherein the storage unit includes a Dynamic Random Access Memory (DRAM) used to store temporarily the digital content.

10. The device for streaming wireless digital content as claimed in claim 1, wherein the output unit further has a display unit and an audio unit electrically connected with a video interface and an audio interface, respectively.

11. The device for streaming wireless digital content as claimed in claim 1, further comprising a cradle electrically connected by a connection adapter, the cradle comprising:
an extension interface;
a power unit, electrically connected with the extension interface and used as a electric power;
a control interface, electrically connected with the extension interface to provide function of remote control; and
a network interface, electrically connected with the extension interface to provide physical network.

12. The device for streaming wireless digital content as claimed in claim 11, further comprising a communication interface for connecting a computer system.

13. The device for streaming wireless digital content as claimed in claim 12, wherein the communication interface is a USB communication port.

14. The device for streaming wireless digital content as claimed in claim 11, wherein the power unit is a rechargeable battery.

15. The device for streaming wireless digital content as claimed in claim 11, wherein the power unit is an external electrical power.

16. The device for streaming wireless digital content as claimed in claim 11, wherein the control interface is an infrared remote control interface.

17. The device for streaming wireless digital content as claimed in claim 11, wherein the control interface is a Bluetooth communication remote control interface.

18. The device for streaming wireless digital content as claimed in claim 11, wherein the control interface is a radio wave remote control interface.

19. A method for streaming wireless digital content, the steps comprising:
detecting a status of a connection network;
detecting a quantity of digital content;
activating a wireless network connection;
streaming wireless digital content;
storing downloaded digital content in a register;
retrieving the downloaded digital content by a FIFO (First-In, First-Out) method;
decoding the downloaded digital content;
determining whether to continue to stream wireless digital content; and
deactivating the wireless network connection,
wherein a minimum quantity of memory space is needed, wherein when the quantity of digital content is equal to or greater than a preset upper limit value, the wireless communication module is deactivated and downloading stops, and when the quantity of digital content is less than the preset lower limit value, the wireless communication module is activated and downloading continues, the device for streaming wireless digital content thereby consuming very little electric power.

20. The method for streaming wireless digital content as claimed in claim 19, wherein how much downloaded digital content is stored in a storage unit is determined.

21. The method for streaming wireless digital content as claimed in claim 20, wherein the storage unit is a flash memory or a Random Access Memory (RAM).

22. The method for streaming wireless digital content as claimed in claim 19, wherein a wireless communication module is activated or deactivated in the step of activating or deactivating the wireless communication module.

23. The method for streaming wireless digital content as claimed in claim 22, wherein the wireless communication module is in power saving mode in the step of deactivating the wireless communication module.

24. The method for streaming wireless digital content as claimed in claim 22, wherein the wireless communication module is in sleeping mode in the step of deactivating the wireless communication module.

25. The method for streaming wireless digital content as claimed in claim 19, wherein the wireless communication module is activated if the wireless communication module is not activated, and downloading begins if the wireless communication module is activated in the step of determining whether to stream wireless digital content.
